# EUROPÄISCHE PATENTSCHRIFT

(11) **EP 1 026 534 B1**
(45) Veröffentlichungstag und Bekanntmachung des Hinweises auf die Patenterteilung: **02.06.2004**
(21) Anmeldenummer: 00101743.3
(22) Anmeldetag: 28.01.2000
(51) Int. Cl.: G02B 17/06

(54) **Richtbare Teleskopanordnung**
Aimable telescope system
Système de télescope orientable

(30) Priorität: 05.02.1999 DE 19904687
(43) Veröffentlichungstag der Anmeldung: 09.08.2000
(73) Patentinhaber: Zeiss Optronik GmbH, 73447 Oberkochen (DE)
(72) Erfinder: Teuchert,Wolf-Dieter,Dr., 89551 Königsbronn (DE)
(74) Vertreter: Gnatzig, Klaus

(56) Entgegenhaltungen:
- EP-A- 0 385 079
- EP-A- 0 601 871
- EP-A- 0 863 421
- US-A- 5 309 276
- US-A- 5 379 157

## Beschreibung

Die Erfindung betrifft eine richtbare Teleskopanordnung nach dem Oberbegriff von Anspruch 1. Eine derartige richtbare Teleskopanordnung ist bekannt aus US-A- 5 379 157.

Eine derartige richtbare Teleskopanordnung ist insbesondere für eine stabilisierte Luftbildkamera oder Aufklärungskamera geeignet.

Aus der EP 601 871 A1 ist eine Spiegelanordnung mit 4 asphärischen Spiegeln bekannt, wobei durch die ersten beiden asphärischen Spiegel ein afokales Teleskop vom Galilei-Typ mit einer Vergrößerung um den Faktor 2 gebildet wird.

Aus der US 4,598,981 und dem Artikel "Easily fabricated wide angle telescope" von Calvin Owen, 430 SPIE, Vol. 1354 ist ein Spiegelsystem mit mindestens 3 Spiegeln bekannt, die eine gemeinsame Spiegelachse aufweisen.

Eine gattungsgemäße Teleskopanordnung ist aus der EP 0 385 079 A2 bekannt. Diese für den Einsatz in einem Kettenfahrzeug vorgesehene Teleskopanordnung ist ein Spiegelteleskop nach Cassegrain mit einer Nasmyth-Anordnung, bei dem eine zentrale Bohrung des Hauptspiegels dadurch vermieden ist, daß vor dem Hauptspiegel bzw. einem gewölbten Spiegel ein Planspiegel den Strahlengang um 90° umlenkt.

Bei dieser bekannten Teleskopanordnung kann zur Sehfeldveränderung der als Konvex-Spiegel ausgebildete zweite gewölbte Spiegel gegen einen anderen Konvex-Spiegel ausgetauscht werden. Damit hat diese stets nur zwei abbildungswirksame gewölbte Spiegel aufweisende Teleskopanordnung entweder ein Sehfeld von 1° oder ein Sehfeld von 3°.

Aufgabe der Erfindung ist es, eine verbesserte richtbare Teleskopanordnung mit hoher Lichtstärke und großem Sehfeld bereitzustellen.

Diese Aufgabe wird durch die Merkmale in Anspruch 1 gelöst. Denn durch drei optisch wirksame gewölbte Spiegel ist bei verbesserter Korrigierbarkeit der Abbildungsfehler eine große Lichtstärke und ein großes Sehfeld, z.B. bis zu 15° Sehfeld-Durchmesser, möglich.

Da insbesondere richtbare Teleskopanordnungen mit großem Sehfeld und/oder hoher Lichtstärke grundsätzlich eine große Eingangspupille erfordern und dies ein hohes primäres Öffnungsverhältnis des Hauptspiegels, d.h. des ersten gewölbten Spiegels, und eine erhebliche Nachvergrößerung durch die weiteren optisch aktiven Elemente bedingt, ist eine optimale Korrigierbarkeit der Abbildungsfehler mittels der mindestens drei asphärisch formbaren Flächen von großer Bedeutung.

Bei einer vorteilhaften Ausführungsform sind der erste gewölbte Spiegel und der zweite gewölbte Spiegel relativ zur Ausblickrichtung der Teleskopanordnung schräg angeordnet und es liegt der zweite gewölbte Spiegel außerhalb des eingangsseitig bis zum ersten gewölbten Spiegel verlaufenden Strahlengangs. Dadurch kann die vor allem bei lichtstarken Cassegrain-Teleskopanordnungen erhebliche Abschattung durch den zweiten gewölbten Spiegel und ggf. den planen Umlenkspiegel, welche sowohl die Lichtstärke als auch die Abbildungsgüte herabsetzt, vermieden werden. Ferner kann dadurch der plane Umlenkspiegel derart angeordnet werden, daß er nicht mehr vom Abbildungsstrahlenbündel umgeben ist, wodurch bei einem motorisch drehbaren Umlenkspiegel die konstruktiven Anforderungen an den Antrieb erheblich verringert sind, was sich auf Feinfühligkeit und Genauigkeit des Antriebs und dadurch auch auf die Abbildungsgüte sehr positiv auswirkt.

Falls die Teleskopanordnung ein Detektorgehäuse und einen um eine Richtachse schwenkbaren, den ersten gewölbten Spiegel und den zweiten gewölbten Spiegel aufnehmenden Ausblickkopf aufweist, kann der Richtbereich der Teleskopanordnung besonders groß sein. Bei einem als drehbare Kugel mit eigenem Fenster ausgebildeten Ausblickkopf kann z.B. ein Richtbereich von plus/minus 140° bezogen auf eine Längsachse der Teleskopanordnung, welche im Falle einer Luftbildkamera der Flugrichtung entsprechen würde, erreicht werden. Aber auch bei detektorgehäusefesten Ausblickfenstern läßt sich bei dieser Ausführungsform ein großer Richtwinkel erreichen.

Auch die weiteren abhängigen Ansprüche sind auf besonders vorteilhafte Ausführungsformen des erfinderischen Grundgedankens gerichtet.

Im folgenden wird die Erfindung anhand von Ausführungsbeispielen im Zusammenhang mit den beigefügten Figuren erläutert.

Es zeigen:
- Figur 1: eine schematische Schnittdarstellung einer ersten Ausführungsform der erfindungsgemäßen Teleskopanordnung;
- Figur 2: die Ausführungsform von Figur 1 in einer Schnittansicht entsprechend der Pfeile II von Figur 1;
- Figur 3: eine schematische Darstellung einer zweiten Ausführungsform in einer der Schnittansicht von Figur 1 entsprechenden Schnittdarstellung;
- Figur 4: eine schematische Darstellung einer dritten Ausführungsform in einer Ansicht entsprechend den Figuren 1 und 3;
- Figur 5: eine schematische Schnittdarstellung einer vierten Ausführungsform;
- Figur 6: die vierte Ausführungsform in einer Schnittdarstellung entsprechend der Pfeile VI von Figur 5;
- Figur 7: die vierte Ausführungsform gesehen in einer Schnittdarstellung entsprechend der Pfeile VII von Figur 6;
- Figur 8: eine erfindungsgemäße Teleskopanordnung mit einem Ausblickfenster, welches von einem schwenkbaren Ausblickkopf mitgeführt wird;
- Figur 9: eine erfindungsgemäße Teleskopanordnung in einem Teleskopbehälter mit mitgeführtem Ausblickfenster;
- Figur 10: eine erfindungsgemäße Teleskopanordnung in einem Teleskopbehälter mit festem Ausblickfenster.

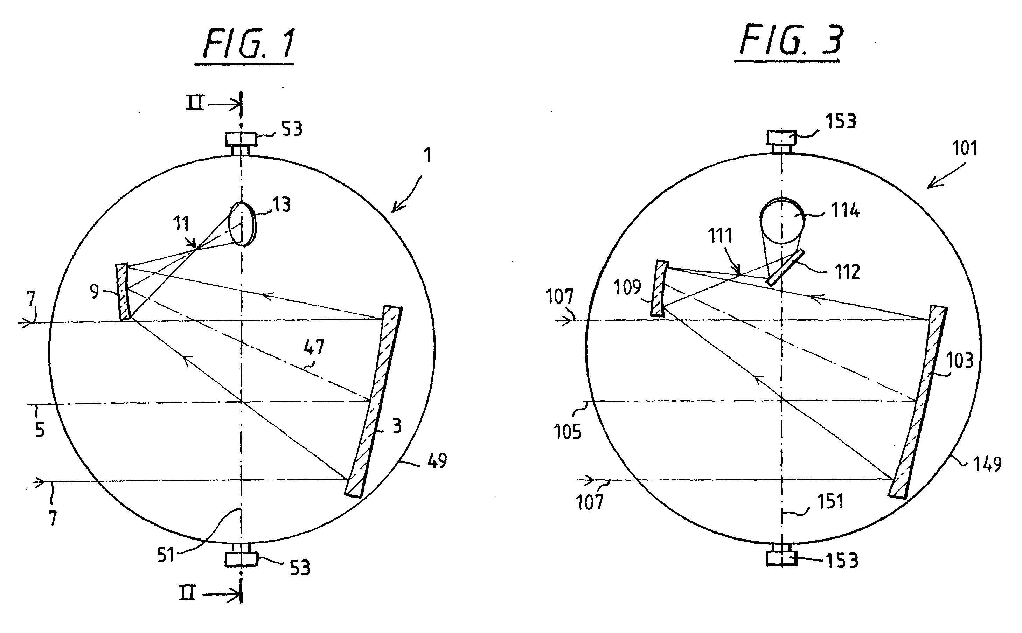

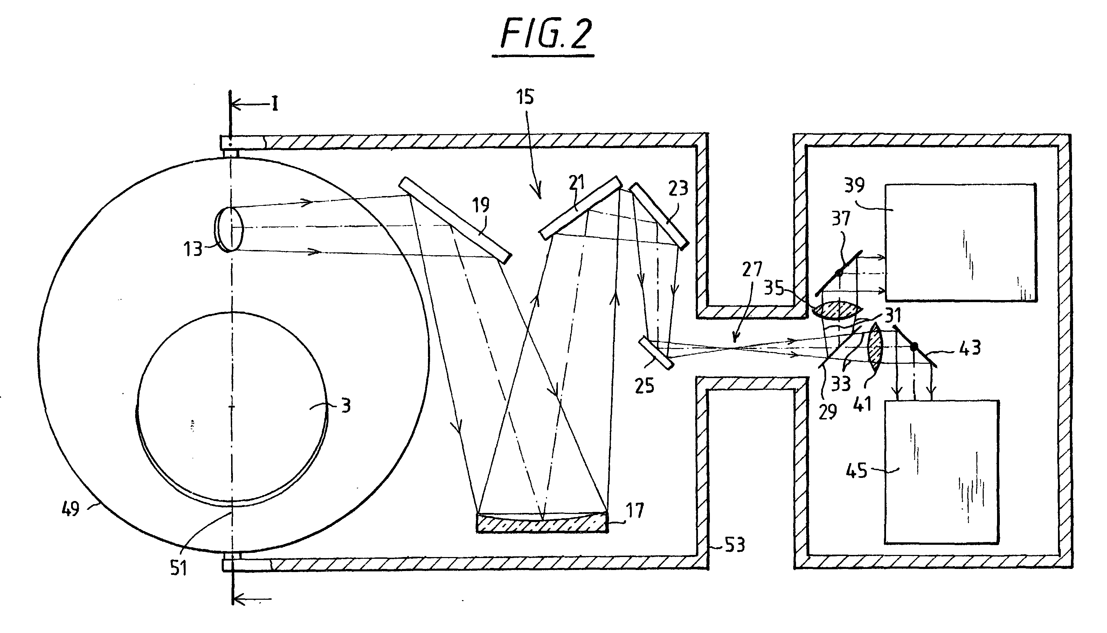

Figur 1 zeigt eine erfindungsgemäße Teleskopanordnung 1 in einem in Vorderansicht gesehenen Axiallängsschnitt und Figur 2 zeigt die Teleskopanordnung 1 in einer geschnittenen Seitenansicht gemäß den Pfeilen II von Figur 1.

Die Teleskopanordnung 1 umfaßt einen ersten gewölbten Spiegel 3, der ein auf ihn entlang einer Sichtlinie 5 auftreffendes Lichtbündel 7 sammelt und auf einen zweiten gewölbten Spiegel 9 lenkt. Der zweite gewölbte Spiegel 9 lenkt das parallele Lichtbündel 7 über einen Zwischenfokus bzw. ein Zwischenbild 11 auf einen planen Umlenkspiegel 13, welcher das Lichtbündel 7 orthogonal zur Zeichenebene von Figur 1 zu einem in Figur 2 erkennbaren Übertragungssystem 15 weiterleitet.

Das Übertragungssystem 15 umfaßt einen großen asphärischen gewölbten Spiegel 17 und Planspiegel 19, 21, 23 und 25. Durch das Übertragungssystem 15 wird das Zwischenbild 11 zu einem weiteren Fokus bzw. Zwischenbild 27 übertragen, wobei mit den Planspiegeln 19, 21, 23 und 25 eine Anpassung an von außen vorgebbare Einbauverhältnisse erreicht werden kann.

Nach dem Zwischenbild 27 wird das Lichtbündel 7 von einem dichroitischen Strahlteiler 29 in einen Infrarotanteil 31 und einen sichtbaren Anteil 33 aufgespalten. Der Infrarotanteil 31 wird von einer refraktiven Optik 35 über einen schwenkbaren Spiegel 37 zu einer Infrarotkameraeinheit 39 gelenkt. Der sichtbare Teil 33 des Strahlenbündels wird über eine refraktive Optik 41 und einen schwenkbaren Umlenkspiegel 43 zu einer sichtbares Licht erfassenden Kameraeinheit 45 gelenkt. Die schwenkbaren Umlenkspiegel 37 und 43 können sowohl zum Abtasten des Bildfelds als auch zur Bildwanderungskompensation dienen, falls die Teleskopanordnung 1 an einem bewegten Teleskopträger, z.B. einem Aufklärungsflugzeug, eingesetzt wird.

Der erste gewölbte Spiegel 3 und der zweite gewölbte Spiegel 9 sind relativ zur Sichtlinie 5 bzw. zu einer Fortsetzung 47 der Sichtlinie zwischen Spiegel 3 und Spiegel 9 schräg angeordnet, wobei der zweite gewölbte Spiegel 9 außerhalb des bis zum ersten gewölbten Spiegel 3 verlaufenden Strahlengangs bzw. Strahlenbündels 7 angeordnet ist. Durch diese schräge und asymmetrische Anordnung der Spiegel 3 und 9 ist also ein abschattungsfreies Schiefspiegler-System verwirklicht.

Die gewölbten Spiegel 3 und 9 sind in einem Ausblickkopf 49 aufgenommen und zusammen mit dem Ausblickkopf 49 um eine Richtachse 51 schwenkbar. Das Übertragungssystem 15 zusammen mit der nachgeordneten Detektoroptik ist in einem ebenfalls sehr schematisch dargestellten Detektorgehäuse 53 angeordnet, welches sich im wesentlichen quer zur Richtachse 51 erstreckt. Der im Bereich der Richtachse 51 angeordnete plane Umlenkspiegel 13 folgt einer Schwenkbewegung des Ausblickkopfs 49 um die Richtachse 51 mit der halben Winkelgeschwindigkeit, d. h. bei einer Verschwenkung des Ausblickkopfs 49 um einen Winkel α muß auch der plane Umlenkspiegel 13 um die Richtachse 51 verschwenkt werden, dies jedoch nur um einem Winkel α/2.

Die in den Figuren 1 und 2 schematisch dargestellte richtbare Teleskopanordnung 1 umfaßt also eine asymmetrische Anordnung zweier hintereinander geschalteter abbildender Systeme mit dazwischenliegendem Fokus 11, wobei das aus den Spiegeln 3 und 9 gebildete erste System eine hohe Lichtstärke aufweist und das zweite System das Übertragungssystem 15 mit dem gewölbten Spiegel 17 umfaßt. Bei der Teleskopanordnung 1 können alle drei gewölbten Spiegel 3, 9 und 17 insbesondere durch ihre drei voll asphärisch korigierbaren Flächen zur Bildfehlerkorrektur verwendet werden. Dadurch weist die Teleskopanordnung 1 innerhalb des korrigierten Bereichs eine hohe Lichtstärke und ein großes Sehfeld auf, wobei sich der optische Aufbau der Teleskopanordnung 1 insbesondere für Brennweiten ab ca. einem Meter aufwärts und Aperturen oberhalb von ca. 320 mm eignet.

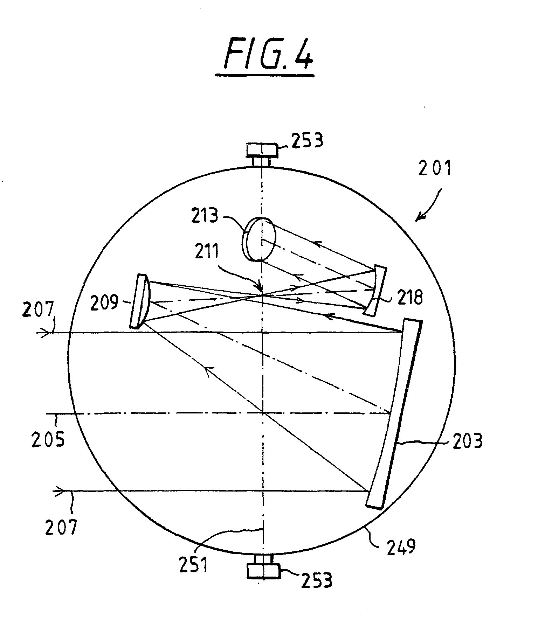

Figur 3 zeigt in einer Figur 1 entsprechenden Ansicht eine weitere erfindungsgemäße richtbare Teleskopanordnung 101. Der Teleskopanordnung 1 entsprechende Elemente der Teleskopanordnung 101 tragen die gleichen Bezugsziffern vermehrt um die Zahl 100. Für deren Beschreibung wird auf die Beschreibung der Teleskopanordnung 1 verwiesen.

Im Unterschied zur Teleskopanordnung 1 umfaßt die Teleskopanordnung 101 zwischen dem zweiten gewölbten Spiegel 109 und dem detektorgehäuseseitigen Übertragungssystem neben einem ebenen Umlenkspiegel 112 einen weiteren ebenen Umlenkspiegel 114 auf. Die beiden Umlenkspiegel 112 und 114 sind im Bereich der Richtachse 151 angeordnet und werden bei einer Verschwenkung des Ausblickkopfs 149 um die Richtachse 151 nicht mitverschwenkt. Die Teleskopanordnung 101 weist damit also einen periskopartigen Aufbau auf. Die dadurch bedingte konstruktive Vereinfachung gegenüber der Teleskopanordnung 1 muß allerdings durch eine im Bereich des Übertragungssystems und der Kamerainstrumentierung der Teleskopanordnung 101 zu beseitigende Bilddrehung erkauft werden.

Der dritte gewölbte Spiegel der Teleskopanordnung 101 ist analog zur Teleskopanordnung 1 im detektorgehäuseseitigen Übertragungssystem angeordnet und deshalb in Figur 3 nicht zu erkennen.

Figur 4 zeigt eine weitere erfindungsgemäße Teleskopanordnung 201. Die den Elementen der Teleskopanordnung 1 entsprechenden Elemente der Teleskopanordnung 201 tragen die gleichen Bezugsziffern vermehrt um die Zahl 200.

Neben dem im Übertragungssystem der Teleskopanordnung 201 angeordneten dritten gewölbten Spiegel umfaßt die Teleskopanordnung 201 einen vierten gewölbten Spiegel 218, welcher das Strahlenbündel 207 von dem zweiten gewölbten Spiegel 209 zu dem planen Umlenkspiegel 213 umlenkt. Der plane Umlenkspiegel 213 folgt analog dem Umlenkspiegel 13 der Teleskopanordnung 1 einer Schwenkbewegung des Ausblickkopfs 249 um die Richtachse 251 mit der halben Winkelgeschwindigkeit.

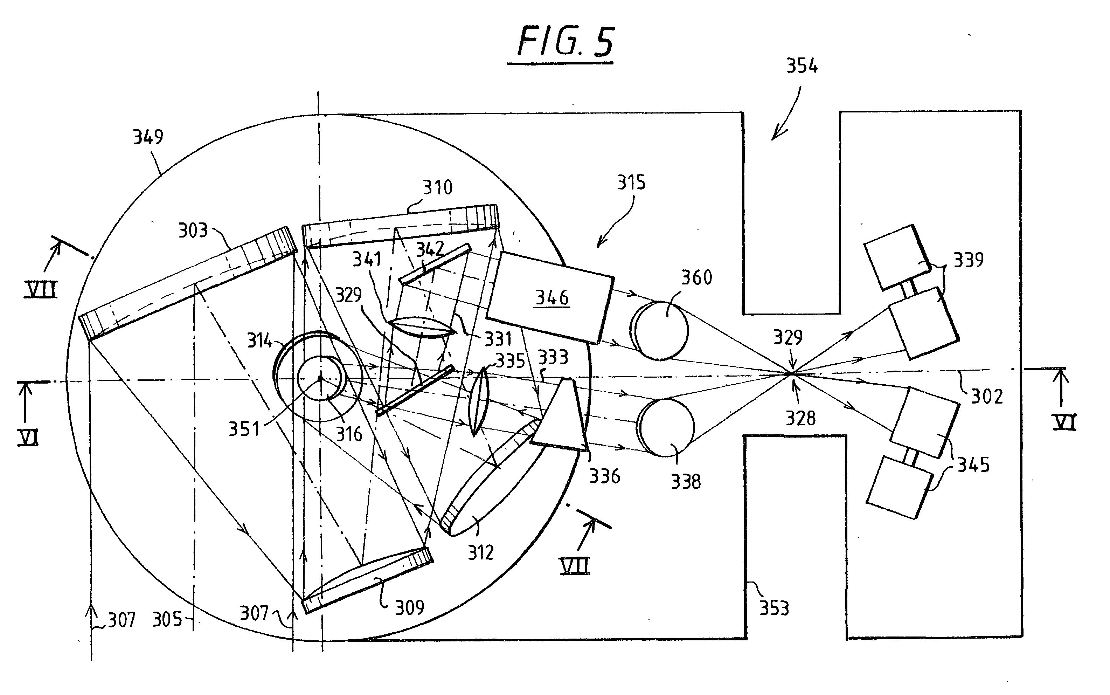

In den Figuren 5 bis 8 ist eine vierte erfindungsgemäße Teleskopanordnung schematisch dargestellt.

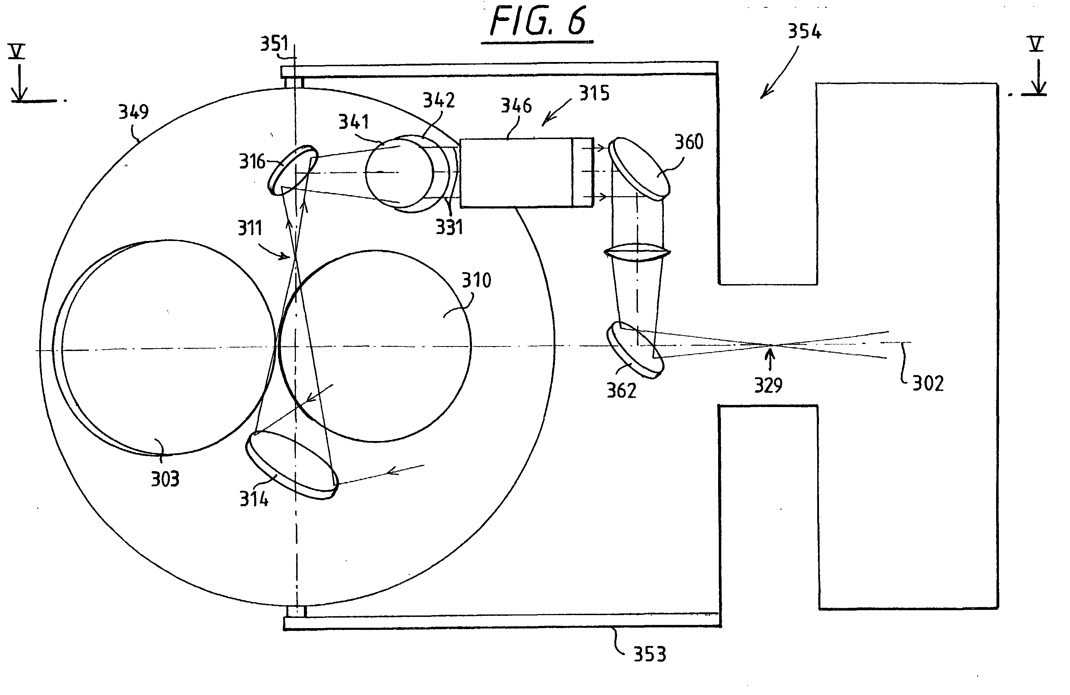

Ein um eine zur Zeichenebene von Figur 5 orthogonale Richtachse 351 schwenkbarer Ausblickkopf 349 ist in Figur 5 in einer geschnittenen Draufsicht und in Figur 6 in einer Seitenansicht zu erkennen. Dabei beziehen sich die Begriffe Draufsicht und Seitenansicht auf eine der bevorzugten Anwendungsformen der erfindungsgemäßen Teleskopanordnung zum seitlichen Ausblick von einem Flugzeug, wobei die Richtachse 351 im wesentlichen orthogonal zur Flugrichtung und eine Längsachse 302 eines Detektorgehäuses 353 im wesentlichen parallel zur Flugrichtung anzuordnen ist.

Die Teleskopanordnung 301 umfaßt einen als Konkavspiegel ausgebildeten ersten gewölbten Spiegel 303, der ein entlang einer Sichtlinie 305 einfallendes Lichtbündel 307 auf einen als Konvexspiegel ausgebildeten zweiten gewölbten Spiegel 309 konzentriert. Im Abbildungsstrahlengang ist dem zweiten gewölbten Spiegel 309 ein als Konkavspiegel ausgebildeter dritter gewölbter Spiegel 310 nachgeordnet.

Von dem Konkavspiegel 310 verläuft der Abbildungsstrahlengang weiter zu einem planen Umlenkspiegel 312 und von diesem zu einem weiteren planen Umlenkspiegel 314.

, In Figur 6 ist zu erkennen, daß der Abbildungsstrahlengang von dem planen Umlenkspiegel 314 weiter zu einem dritten planen Umlenkspiegel 316 umgelenkt wird. Ferner ist zu erkennen, daß zwischen den planen Umlenkspiegeln 314 und 316 ein Fokus bzw. Zwischenbild 311 entsteht und daß die Planspiegel 314 und 316 im Bereich der Richtachse 351 angeordnet sind, wobei die Planspiegel 314 und 312 sowie die gewölbten Spiegeln 303, 309 und 310 zusammen mit dem Ausblickkopf 349 um die Richtachse 351 verschwenkbar sind, während der Planspiegel 316 einer Schwenkbewegung des Ausblickkopfs nicht folgt, sondern relativ zum Detektorgehäuse 353 stets die gleich Orientierung und Lage einnimmt.

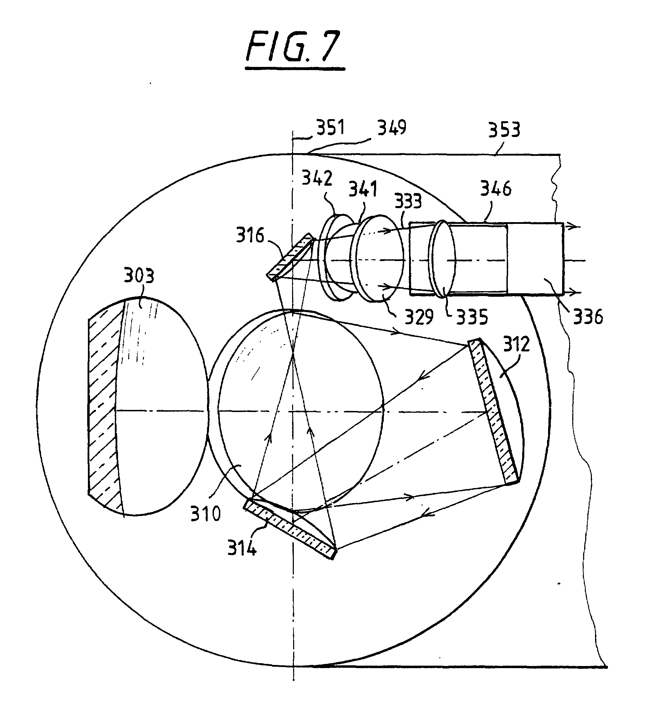

Die durch die Pfeile VII in Figur 5 bezeichnete Schnittlinie ist relativ zur Detektorgehäuse-Längsachse 302 um einen Winkel von 30° gedreht. Den Figuren 6 und 7 lassen sich also die Orientierungen der planen Umlenkspiegel 312, 314 und 316 entnehmen.

In den Figuren 5 bis 7 ist auch das in dem Detektorgehäuse 353 angeordnete bzw. relativ zum Detektorgehäuse 353 stationäre Übertragungssystem 315 der Teleskopanordnung 301 zu erkennen.

Von dem planen Umlenkspiegel 316 kommend wird das Abbildungsstrahlenbündel von einem dichroitischen Strahlteiler 329 in einen Infrarotanteil 331 und einen sichtbaren Anteil 333 aufgespalten. Der Infrarotanteil 331 wird über eine refraktive Optik 335, eine als Dove-Prisma oder Taylor-Prisma ausgebildete Bildaufrichteinheit 336, weitere plane Umlenkspiegel 338 unter Bildung eines Zwischenfokus bzw. Zwischenbilds 328 zu einer einen schwenkbaren Umlenkspiegel und eine Infrarotkamera umfassenden Detektoreinheit 339 geführt. Dabei entspricht die Detektoreinheit 339 im wesentlichen der im Zusammenhang mit Figur 2 beschriebenen Detektoreinheit.

In ähnlicher Weise wird das sichtbare Strahlenbündel 331 über eine nur schematisch dargestellte refraktive Optik 341, ein Umlenkelement 342, eine Bildaufrichteinheit 346 sowie plane Umlenkspiegel 360 und 362 zu einer Detektoreinheit 345 geführt. Auch im Strahlengang des sichtbaren Lichtbündels 331 wird zwischen dem Umlenkspiegel 362 und der Detektoreinheit 345 ein Zwischenfokus bzw. ein Zwischenbild 329 gebildet, das wie das Zwischenbild 328 auch im Bereich der Längsachse 302 des Detektorgehäuses 353 liegt.

Beim Übertragungssystem 315 erfolgt die Strahlteilung also in einem Bereich des Abbildungsstrahlengangs mit divergentem Lichtbündel. Der Bereich des Abbildungsstrahlengangs mit parallelem Lichtbündel nach dem Strahlteiler 329 wird jeweils zur Bildaufrichtung genutzt. Das Übertragungssystem 315 ermöglicht die Übertragung des Zwischenbilds 311 zu den Zwischenbildern 328 und 329 mit sich kreuzenden Optikkanälen, wobei ein aus Gründen der Lagerung der Teleskopanordnung sich verengender Bereich 354 des Detektorgehäuses 353 nicht aufgeweitet werden muß.

Der optische Aufbau der Teleskopanordnung 301 eignet sich insbesondere bei Brennweiten unterhalb ca. einem Meter und Sehfeldern im Bereich von 2° bis 5° oder sogar noch darüber hinaus.

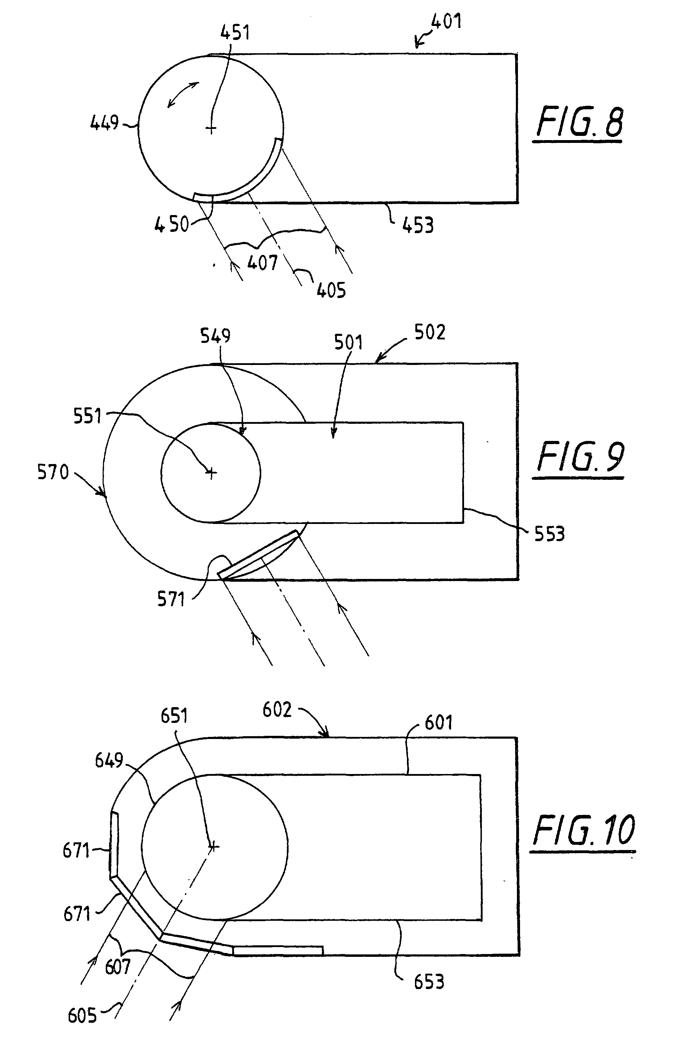

In Figur 8 ist eine erfindungsgemäße Teleskopanordnung 401 mit einem Ausblickkopf 449, der um eine zur Zeichenebene von Figur 8 orthogonale Richtachse 451 relativ zu einem Detektorgehäuse 453 drehbar ist, sehr schematisch dargestellt. Der Ausblickkopf 449 weist ein zusammen mit diesem verschwenkbares sphärisches Ausblickfenster 450 auf, durch das ein Lichtbündel 407 entlang der Ausblickrichtung 405 eintritt.

In Figur 9 ist eine in einem Teleskopbehälter 502 aufgenommene Teleskopanordnung 501 schematisch dargestellt, dabei tragen die den Elementen von Figur 8 entsprechenden Elemente von Figur 9 die gleichen Bezugszeichen wie in Figur 8 vermehrt um die Zahl 100.

Es ist zu erkennen, daß der Teleskopbehälter 502 eine um eine Richtachse 551 gesondert verschwenkbare Behälterhaube 570 mit einem Ausblickfenster 571 aufweist. Diese entkoppelte Anordnung von Ausblickkopf 549 und nachgeführtem Fenster 571 ist im Hinblick auf den Einsatz der Teleskopanordnung 501 als flugzeuggestützte Aufklärungskamera besonders stabilisierungsgünstig. In diesem Anwendungsfall ist der Teleskopbehälter 502 als sogenannter Pod am Rumpf des Trägerflugzeugs angeordnet.

Figur 10 zeigt eine Teleskopanordnung 601 in einem Teleskopbehälter 602, welcher feste Ausblickfenster 671 aufweist. Die den Elementen von Figur 8 entsprechenden Elemente von Figur 10 tragen die gleichen Bezugszeichen wie in Figur 8 vermehrt um die Zahl 200.

## Patentansprüche

1. Richtbare Teleskopanordnung (1; 101; 201; 301) mit einem ersten gewölbten Spiegel (3; 103; 203; 303), einem zweiten gewölbten Spiegel (9; 109; 209; 309) und einem planen Umlenkspiegel (13; 114; 213; 316),
und mit im Abbildungsstrahlengang der Teleskopanordnung (1; 101; 201; 301) einem dritten gewölbter Spiegel (17; 310) der zusammen mit dem ersten gewölbten Spiegel (3; 103; 203; 303) und dem zweiten gewölbten Spiegel (9; 109; 209; 309) abbildungswirksam ist,
**dadurch gekennzeichnet, daß**
der erste gewölbte Spiegel (3; 103; 203; 303) und der zweite gewölbte Spiegel (9; 101; 201; 301) ein abschattungsfreies Schiefspieglersystem bilden.

2. Teleskopanordnung (1; 101; 201; 301) nach Anspruch 1, wobei der erste gewölbte Spiegel (3; 103; 203; 303) und der zweite gewölbte Spiegel (9; 109; 209; 309) relativ zur Ausblickrichtung (5; 105; 205; 305) der Teleskopanordnung (1; 141; 201; 301) schräg angeordnet sind und der zweite gewölbte Spiegel (9; 109; 209; 309) außerhalb des eingangsseitig bis zum ersten gewölbten Spiegel (3; 103; 203; 303) verlaufenden Strahlengangs (7; 107; 207; 307) angeordnet ist.

3. Teleskopanordnung (1; 101; 201; 301) nach Anspruch 1 oder 2, wobei die Teleskopanordnung (1; 101; 201; 301) ein Detektorgehäuse (53; 153; 253; 353) und einen um eine Richtachse (51; 151; 251; 351) schwenkbaren, den ersten gewölbten Spiegel (3; 103; 203; 303) und den zweiten gewölbten Spiegel (9; 109; 209; 309) aufnehmenden Ausblickkopf (49; 149; 249; 349) aufweist.

4. Teleskopanordnung (1; 101; 201; 301) nach Anspruch 3, wobei der plane Umlenkspiegel (13; 114; 213; 316) auf der Richtachse (51; 151; 251; 351) angeordnet ist und den Abbildungsstrahlengang zu einem in dem Detektorgehäuse (53; 153; 253; 353) angeordneten Übertragungssystem (15; 315) umlenkt.

5. Teleskopanordnung (1; 101; 201; 301) nach einem der Ansprüche 1 bis 4, wobei der Abbildungsstrahlengang der Teleskopanordnung (1; 101; 201; 301) ein Zwischenbild (11; 111; 211; 311) im Bereich des Ausblickkopfs (49; 149; 249; 349) aufweist.

6. Teleskopanordnung (1; 101; 201) nach Anspruch 5, wobei das Zwischenbild (11; 111; 211) zwischen dem zweiten gewölbten Spiegel (9; 109; 209) und dem dritten gewölbten Spiegel (17) liegt.

7. Teleskopanordnung (1; 101; 201) nach Anspruch 4 und Anspruch 6, wobei der dritte gewölbte Spiegel (17) im Übertragungssystem (15) angeordnet ist.

8. Teleskopanordnung (201) nach Anspruch 6 oder 7, wobei ein vierter gewölbter Spiegel (218) im Abbildungsstrahlengang der Teleskopanordnung (201) vorgesehen . ist.

9. Teleskopanordnung (1; 201) nach Anspruch 3 und einem der Ansprüche 4 bis 8, wobei der plane Umlenkspiegel (13; 213) einer Schwenkbewegung des Ausblickkopfs (49; 249) um die Richtachse (51; 251) mit der halben Winkelgeschwindigkeit folgt.

10. Teleskopanordnung (301) nach Anspruch 5, wobei das Zwischenbild (311) nach dem dritten Spiegel (310) liegt.

11. Teleskopanordnung (301) nach Anspruch 10, wobei der erste gewölbte Spiegel (303) sowie der dritte gewölbte Spiegel (310) konkav sind und der zweite gewölbte Spiegel (309) konvex ist.

12. Teleskopanordnung (301) nach Anspruch 10 oder 11, wobei in dem Ausblickkopf (349) zwei, zusammen mit dem Ausblickkopf (349) verschwenkbare plane Umlenkspiegel (312, 314) angeordnet sind.

13. Teleskopanordnung (101; 301) nach Anspruch 4 und 12, wobei ein detektorgehäusefester planer Umlenkspiegel (114; 316) den Abbildungsstrahlengang zu dem Übertragungssystem (315) lenkt.

14. Teleskopanordnung (101; 301) nach Anspruch 13, wobei das Übertragungssystem (315) eine Bildaufrichtungseinrichtung (346, 336) umfaßt.

15. Teleskopanordnung (1; 101; 201; 301) nach Anspruch 4 und einem der Ansprüche 5 bis 14, wobei das Übertragungssystem (15; 315) einen dichroitischen Strahlteiler (29; 329) umfaßt.

16. Teleskopanordnung (1; 101; 201; 301) nach Anspruch 3 und einem der Ansprüche 4 bis 15, wobei das Detektorgehäuse (53; 353) einen Bildsensor (39, 45; 339, 345) umfaßt, dem eine Okularoptik mit schwenkbarem Umlenkspiegel (37, 43) zugeordnet ist.

17. Teleskopanordnung (1; 101; 201; 301 ) nach Anspruch 16, wobei der Abbildungsstrahlengang der Teleskopanordnung (1; 101; 241; 301) ein zweites Zwischenbild (27; 328, 329) aufweist, welches zwischen dem Übertragungssystem (15; 315) und den Detektoreinheiten (39,45; 339. 345) liegt.

18. Teleskopanordnung (1; 101; 201; 301) nach einem der Ansprüche 1 bis 17, wobei die Teleskopanordnung (1; 101; 201; 301) elektrooptische Bildsensoren (39; 45) umfaßt.

19. Teleskopanordnung (1; 101; 201; 301) nach Anspruch 18, wobei die Teleskopanordnung (1; 101; 201; 301) einen Bildsensor (45) für sichtbares Licht und einen weiteren Bildsensor (39) für infrarotes Licht umfaßt.

20. Teleskopanordnung (1; 101; 201; 301) nach Anspruch 19, wobei jedem der Bildsensoren (39, 45) eine gesonderte Okularoptik mit schwenkbarem Umlenkspiegel (37, 43) zugeordnet ist.

## Claims

1. Pointable telescope arrangement (1; 101; 201; 301) having a first curved mirror (3; 103; 203; 303), a second curved mirror (9; 109; 209; 309) and a plane deflecting mirror (13; 114; 213; 316), and having in the imaging beam path of the telescope arrangement (1; 101; 201; 301) a third curved mirror (17; 310) which is active in imaging terms together with the first curved mirror (3; 103; 203; 303) and the second curved mirror (9; 109; 209; 309), **characterized in that** the first curved mirror (3; 103; 203; 303) and the second curved mirror (9; 109; 209; 309) form a non-vignetting oblique mirror system.

2. Telescope arrangement (1; 101; 201; 301) according to Claim 1, in which the first curved mirror (3; 103; 203; 303) and the second curved mirror (9; 109; 209; 309) are arranged inclined relative to the outlook direction (5; 105; 205; 305) of the telescope arrangement (1; 101; 201; 301), and the second curved mirror (9; 109; 209; 309) is arranged outside the beam path (7; 107; 207; 307) running at the input end up to the first curved mirror (3; 103; 203; 303).

3. Telescope arrangement (1; 101; 201; 301) according to Claim 1 or 2, in which the telescope arrangement (1; 101; 201; 301) has a detector housing (53; 153; 253; 353) and an outlook head (49; 149; 249; 349) which can be swivelled about a directional axis (51; 151; 251; 351) and holds the first curved mirror (3; 103; 203; 303) and the second curved mirror (9; 109; 209; 309).

4. Telescope arrangement (1; 101; 201; 301) according to Claim 3, in which the plane deflecting mirror (13; 114; 213; 316) is arranged on the directional axis (51; 151; 251; 351) and deflects the imaging beam path to a transmission system (15; 315) arranged in the detector housing (53; 153; 253; 353).

5. Telescope arrangement (1; 101; 201; 301) according to one of Claims 1 to 4, in which the imaging beam path of the telescope arrangement (1; 101; 201; 301) has an intermediate image (11; 111; 211; 311) in the region of the outlook head (49; 149; 249; 349).

6. Telescope arrangement (1; 101; 201) according to Claim 5, in which the intermediate image (11; 111; 211) is situated between the second curved mirror (9; 109; 209) and the third curved mirror (17).

7. Telescope arrangement (1; 101; 201) according to Claim 4 and Claim 6, in which the third curved mirror (17) is arranged in the transmission system (15).

8. Telescope arrangement (201) according to Claim 6 or 7, in which a fourth curved mirror (218) is provided in the imaging beam path of the telescope arrangement (201).

9. Telescope arrangement (1; 201) according to Claim 3 and one of Claims 4 to 8, in which the plane deflecting mirror (13; 213) follows a swivelling movement of the outlook head (49; 249) about the directional axis (51; 251) at half the angular speed.

10. Telescope arrangement (301) according to Claim 5, in which the intermediate image (311) is situated after the third mirror (310).

11. Telescope arrangement (301) according to Claim 10, in which the first curved mirror (303) and the third curved mirror (310) are concave and the second curved mirror (309) is convex.

12. Telescope arrangement (301) according to Claim 10 or 11, in which two plane deflecting mirrors (312, 314) which can be swivelled together with the outlook head (349) are arranged in the outlook head (349).

13. Telescope arrangement (101; 301) according to Claims 4 and 12, in which a plane deflecting mirror (114; 316) fixed to the detector housing directs the imaging beam path to the transmission system (315).

14. Telescope arrangement (101; 301) according to Claim 13, in which the transmission system (315) comprises an image erecting device (346, 336).

15. Telescope arrangement (1; 101; 201; 301) according to Claim 4 and one of Claims 5 to 14, in which the transmission system (15; 315) comprises a dichroic beam splitter (29; 329).

16. Telescope arrangement (1; 101; 201; 301) according to Claim 3 and one of Claims 4 to 15, in which the detector housing (53; 353) comprises an image sensor (39, 45; 339, 345) to which an eyepiece optical system with a swivellable deflecting mirror (37, 43) is assigned.

17. Telescope arrangement (1; 101; 201; 301) according to Claim 16, in which the imaging beam path of the telescope arrangement (1; 101; 201; 301) has a second intermediate image (27; 328, 329) which is situated between the transmission system (15; 315) and the detector units (39, 45; 339, 345).

18. Telescope arrangement (1; 101; 201; 301) according to one of Claims 1 to 17, in which the telescope arrangement (1; 101; 201; 301) comprises electrooptical image sensors (39; 45).

19. Telescope arrangement (1; 101; 201; 301) according to Claim 18, in which the telescope arrangement (1; 101; 201; 301) comprises an image sensor (45) for visible light and a further image sensor (39) for infrared light.

20. Telescope arrangement (1; 101; 201; 301) according to Claim 19, in which each of the image sensors (39, 45) is assigned a separate eyepiece optical system with a swivellable deflecting mirror (37, 43).

## Revendications

1. Système de télescope orientable (1 ; 101 ; 201 ; 301) comprenant un premier miroir bombé (3 ; 103 ; 203 ; 303), un deuxième miroir bombé (9 ; 109 ; 209 ; 309) et un miroir de déviation plan (13 ; 114 ; 213 ; 316), et comprenant dans le faisceau de représentation du système de télescope (1 ; 101 ; 201 ; 301) un troisième miroir bombé (17 ; 310) qui agit conjointement avec le premier miroir bombé (3 ; 103 ; 203 ; 303) et avec le deuxième miroir bombé (9 ; 109 ; 209 ; 309) pour la représentation, **caractérisé en ce que** le premier miroir bombé (3 ; 103 ; 203 ; 303) et le deuxième miroir bombé (9 ; 109 ; 209 ; 309) forment un ensemble de miroirs inclinés sans obscurcissement.

2. Système de télescope (1 ; 101 ; 201 ; 301) selon la revendication 1, avec lequel le premier miroir bombé (3 ; 103 ; 203 ; 303) et le deuxième miroir bombé (9 ; 109 ; 209 ; 309) sont disposés en biais par rapport au sens de l'observation (5 ; 105 ; 205 ; 305) du système de télescope (1 ; 101 ; 201 ; 301) et le deuxième miroir bombé (9 ; 109 ; 209 ; 309) est disposé en dehors du trajet du faisceau (7 ; 107 ; 207 ; 307) qui s'étend du côté de l'entrée jusqu'au premier miroir bombé (3 ; 103 ; 203 ; 303).

3. Système de télescope (1 ; 101 ; 201 ; 301) selon la revendication 1 ou 2, avec lequel le système de télescope (1 ; 101 ; 201 ; 301) présente un boîtier détecteur (53 ; 153 ; 253 ; 353) et une tête d'observation (49 ; 149 ; 249 ; 349) pivotante autour d'un axe de pointage (51 ; 151 ; 251 ; 351) et recevant le premier miroir bombé (3 ; 103 ; 203 ; 303) et le deuxième miroir bombé (9 ; 109 ; 209 ; 309).

4. Système de télescope (1 ; 101 ; 201 ; 301) selon la revendication 3, avec lequel le miroir de déviation plan (13 ; 114 ; 213 ; 316) est disposé sur l'axe de pointage (51 ; 151 ; 251 ; 351) et dévie le faisceau de représentation vers un système de transmission (15 ; 315) disposé dans le boîtier détecteur (53, 153, 253, 353).

5. Système de télescope (1 ; 101 ; 201; 301) selon l'une des revendications 1 à 4, avec lequel le faisceau de représentation du système de télescope (1 ; 101 ; 201 ; 301) présente une image intermédiaire (11 ; 111 ; 211 ; 311) dans la zone de la tête d'observation (49 ; 149 ; 249 ; 349).

6. Système de télescope (1 ; 101 ; 201) selon la revendication 5, avec lequel l'image intermédiaire (11 ; 111 ; 211) se trouve entre le deuxième miroir bombé (9 ; 109 ; 209) et le troisième miroir bombé (17).

7. Système de télescope (1 ; 101 ; 201) selon la revendication 4 et la revendication 6, avec lequel le troisième miroir bombé (17) est disposé dans le système de transmission (15).

8. Système de télescope (201) selon la revendication 6 ou 7, avec lequel un quatrième miroir bombé (218) est prévu dans le faisceau de représentation du système de télescope (201).

9. Système de télescope (1 ; 201) selon la revendication 3 et l'une des revendications 4 à 8, avec lequel le miroir de déviation plan (13 ; 213) suit un mouvement pivotant de la tête d'observation (49 ; 249) autour de l'axe de pointage (51 ; 251) avec la moitié de la vitesse angulaire.

10. Système de télescope (301) selon la revendication 5, avec lequel l'image intermédiaire (311) se trouve après le troisième miroir (310).

11. Système de télescope (301) selon la revendication 10, avec lequel le premier miroir bombé (303) ainsi que le troisième miroir bombé (310) sont concaves et le deuxième miroir bombé (309) est convexe.

12. Système de télescope (301) selon la revendication 10 ou 11, avec lequel deux miroirs de déviation plans (312, 314) qui peuvent pivoter en même temps que la tête d'observation (349) sont disposés dans la tête d'observation (349).

13. Système de télescope (101 ; 301) selon la revendication 4 et 12, avec lequel un miroir de déviation plan (114 ; 316) fixé au boîtier détecteur dévie le faisceau de représentation vers le système de transmission (315).

14. Système de télescope (101 ; 301) selon la revendication 13, avec lequel le système de transmission (315) comprend un dispositif de redressement de l'image (346, 336).

15. Système de télescope (1 ; 101 ; 201 ; 301) selon la revendication 4 et l'une des revendications 5 à 14, avec lequel le système de transmission (15 ; 315) comprend un fractionneur de rayon (29 ; 329) dichroïque.

16. Système de télescope (1 ; 101 ; 201 ; 301) selon la revendication 3 et l'une des revendications 4 à 15, avec lequel le boîtier détecteur (53 ; 353) comprend un capteur d'image (39, 45 ; 339, 345) auquel est associée une optique oculaire avec un miroir de déviation (37, 43) pivotant.

17. Système de télescope (1 ; 101 ; 201 ; 301) selon la revendication 16, avec lequel le faisceau de représentation du système de télescope (1 ;101 ; 201 ; 301) présente une deuxième image intermédiaire (27 ; 328 ; 329) qui se trouve entre le système de transmission (15 ; 315) et les unités de détection (39, 45 ; 339, 345).

18. Système de télescope (1 ; 101 ; 201 ; 301) selon l'une des revendications 1 à 17, avec lequel le système de télescope (1 ; 101 ; 201 ; 301) comprend des capteurs d'image électro-optiques (39 ; 45).

19. Système de télescope (1 ; 101 ; 201 ; 301) selon la revendication 18, avec lequel le système de télescope (1 ; 101 ; 201 ; 301) comprend un capteur d'image (45) pour la lumière visible et un autre capteur d'image (39) pour la lumière infrarouge.

20. Système de télescope (1 ; 101 ; 201 ; 301) selon la revendication 19, avec lequel une optique oculaire particulière avec miroir de déviation (37, 43) pivotant est associée à chacun des capteurs d'image (39, 45).
